# FASCICULE DE BREVET EUROPEEN

(11) **EP 3 268 242 B1**
(45) Date de publication et mention de la délivrance du brevet: **10.11.2021**
(21) Numéro de dépôt: 16723790.8
(22) Date de dépôt: 10.03.2016
(51) Int. Cl.: B60L 50/30

(54) **SYSTÈME EMBARQUÉ POUR RECHARGER DES BATTERIES EMBARQUÉES DANS UN VÉHICULE ÉLECTRIQUE**
BORDSYSTEM ZUM WIEDERAUFLADEN VON BORDBATTERIEN IN EINEM ELEKTROFAHRZEUG
ON-BOARD SYSTEM FOR RECHARGING ON-BOARD BATTERIES IN AN ELECTRIC VEHICLE

(30) Priorité: 10.03.2015 FR 1500465
(43) Date de publication de la demande: 17.01.2018
(73) Titulaire: Barbarie, Yves, 35300 Fougères (FR)
(72) Inventeur: Barbarie, Yves, 35300 Fougères (FR)
(74) Mandataire: Vidon Brevets & Stratégie
(86) Numéro de dépôt international: PCT/FR2016/000044
(87) Numéro de publication internationale: WO 2016/142594

(56) Documents cités:
- EP-A1- 2 762 351
- US-A1- 2011 271 790
- US-A1- 2014 103 761

## Description

Cette invention est du domaine des moyens de transport utilisant l'énergie électrique et sa technologie pour se déplacer. Les premières voitures électriques ont fait leur apparition vers 1880 pour être rapidement supplantées une trentaine d'années plus tard par la voiture à moteur thermique. Les premières années d'existence de la voiture électrique permirent de mettre en perspective les caractéristiques responsables de son incapacité à conserver sa part de marché.

Ainsi, lorsqu'aujourd'hui la problématique du véhicule électrique est abordée les difficultés auxquelles durent faire face les premiers concepteurs de ce type de motorisation refont surface. En bref, à l'encontre du moteur électrique, le moteur thermique voyait son parcours limité par la quantité d'essence contenu dans le réservoir alors que le moteur électrique dépendait de piles à remplacer ou à recharger une fois épuisées après n'avoir parcouru qu'une fraction de la distance que permettait une voiture équipée d'un moteur thermique.

Quand est posée la question de vouloir déplacer un véhicule par une énergie purement électrique, le problème soulevé ou défi à surmonter est donc celui de régénérer ou d'accéder à l'énergie qui lui est vitale, d'accroître l'efficacité des batteries et conséquemment de prolonger la disponibilité de cette énergie dans la durée réduisant de ce fait le nombre d'arrêt 'bornes relais' pour atteindre la destination prévue.

### Présentation de la problématique

En analysant les facteurs qui font que la voiture 100% électrique n'est toujours pas le moyen plébiscité par tous pour se déplacer au quotidien, notre objectif était de trouver une solution qui puisse permettre au véhicule électrique de se rapprocher encore plus de son ambition : devenir une alternative sérieuse au moteur thermique.

Les techniques présentement appliquées ou proposées sont multiples et plusieurs sont onéreuses ou peu accommodantes. Une de ces techniques est décrite dans le document US2014/103761 qui propose un système de stockage d'énergie pour un véhicule. Des terres rares peuvent suite aux résultats de recherches récentes donner lieu à la construction de batteries très performantes mais le coût de la voiture devient alors prohibitif, ce minerai exceptionnel se trouvant en quantité très limitée sur votre planète. Une production de masse ne peut donc être envisagée.

Il revient donc aux chercheurs de trouver l'agencement ou la combinaison idéale de métaux et éléments chimiques pour fabriquer la pile Haute Performance à recharges illimitées et à coûts raisonnables pour remplacer les batteries i-tech présentement disponibles sur le marché grand public.

Le second défi à relever est celui de trouver le moyen d'effectuer une recharge de piles en un minimum de temps.

Cela implique évidemment un système de types condensateurs très performants, de taille réduite, simple de fonctionnement, sans effets secondaires sur les batteries (réchauffement excessif, durée de vie écourtée) et alimenté en temps réel, en région urbaine ou reculée par le réseau d'approvisionnement national.

La présence d'un tel système de recharge installé sur l'ensemble du réseau routier est un projet d'envergure qui prendra forme avec le temps.

La voiture électrique ne peut exister véritablement qu'en trouvant la solution à ces deux problèmes : l'efficacité des bornes de recharge sur le réseau routier et la performance de batteries à recharge illimitées.

Malgré la complexité de ces obstacles à surmonter, nous répondons pourtant par l'affirmative à la question de savoir si l'espoir de jouir des qualités inhérentes au mode de transport électrique est prévisible dans un avenir proche.

Les techniques appliquées jusqu'ici pour recharger les batteries vont de la charge standard à domicile à partir d'une prise adaptée à l'accès ponctuel à une borne haut débit dans des zones précises offrant le service aux heureux propriétaires en passant par des moyens technologiques exploitant la mécanique de contrôle du véhicule développés pour récupérer une partie de l'énergie dégagée par la puissance cinétique du véhicule en déplacement.

Ainsi lorsque la poussée motrice qui propulse ou tracte n'est pas engagée, le véhicule utilise les nombreux instants de freinage pendant le trajet et les périodes de décompression du moteur (lorsque le conducteur lève le pied de l'accélérateur ou qu'il entame une descente) qui actionnent différents systèmes générateurs pour produire une certaine quantité d'énergie électrique et régénèrer partiellement l'ensemble batteries.

Une autre technologie intègre à l'unité motrice du véhicule un générateur couplé à l'axe moteur ou d'engagement, le moteur ayant alors la double fonction de déplacer le véhicule (et ce qu'il transporte) et d'entraîner l'unité génératrice afin de produire une certaine quantité d'électricité pour compenser celle étant consommée par le moteur propulseur qui doit de plus répondre aux sollicitations du conducteur, aux efforts et exigences du parcours emprunté et aux imprévus du trajet.

Toutes ses techniques régénèrent les batteries du véhicule, et remettent à plus tard l'épuisement des batteries et retardent l'arrêt recharge de quelques kilomètres.

Celles-ci ne permettent pourtant pas encore un reflux d'énergie suffisant pour satisfaire l'attente des constructeurs et des futurs consommateurs.

### Résolution de la problématique soulevée

La solution que nous proposons, l'objet de notre invention, est un système embarqué selon la revendication capable de recharger les batteries embarquées d'un véhicule (et autres moyens de transport à traction ou propilsion électrique) que celui-ci soit en marche (en mouvement)ou à l'arrêt (immobilisé).

Ce système embarqué comprend un moteur démarreur / générateur branché sur l'ensem ble batteries qui, dans le processus de production, place initialement en rotation prépio-grammée électroniquement un volant d'inertie dont la vitesse est contenue pour raisons de sécurité par une unité d'engrenages fournissant à la sortie une vitesse de rotation augmentée, récupérée et redirigée par un arbre de transmission dédié (pour élargir et prolonger l'exploitation du créneau productif de l'énergie cinétique générée) vers le moteur devenu dès lors générateur d'une énergie électrique aussiôt stockée dans les batteries embarquées.

Ces caractéristiques propres à ce système de recharge avantage tous types de véhicules ou appareils ou moyens de transport fonctionnant en partie ou en totalité à l'électricité.

Installé dans un boîtier à armature sécuritaire, notre système par sa taille et son poids raisonnable dûs au nombre restreints de composants actifs et à la multifonctionnalité de certains d'entre eux, peut être aisément positionné et fixé selon l'agencement des éléments propulseurs, à l'avant, (sous le capot), ou à l'arrière (dans le coffre) du véhicule ou de l'appareil. Le système devient fonctionnel dès que le contrôle électronique est lié au tableau de bord du véhicule et que l'unité moteur / générateur est branchée à l'ensemble batteries.

Lorsque le système est dans l'incapacité de combler une consommation trop rapide de l'énergie entreposée (ex. des vitesses ou sollicitations excessives), le conducteur doit veiller à prestement se rapprocher des services de bornes de recharge standard ou à haut débit du réseau national d'approvisionnement en électricité .

A yun signal d'alerte affiché au tableau de bord indiquant qu'un minimum d'énergie est encore disponible, le conducteur peut afin d'éviter la panne 'sèche', choisir d'immobiliser le véhicule le temps d'une recharge totale ou partielle par notre système embarqué.

Dans des conditions de conduite normale, notre système a pour objectif d'augmenter le nombre de kilomètres parcouru entre deux recharges par bornes relais et raccourcir ainsi la durée véritable du trajet.

### Selon des modes particuliers de réalisation :

La présente invention est un système de production d'électricité ayant un rapport étroit entre la capacité énergétique d'un moteur jouant le rôle de démarreur (1 M/), d'un volant d'inertie (3) qu'il met en rotation et du moteur (1 M/) devenu générateur (1 /G) produisant de l'électricité à partir de l'énergie cinétique provenant de la vitesse de rotation, du volant d'inertie (3), multipliée par conversion mécanique (5).

Ce système pour recharger l'unité piles (8) embarquée peut être placé dans et utilisé par un véhicule, un aéronef ou autres moyens de transport à propulsion ou traction électrique.

Ce système est composé de cinq types d'éléments actifs distincts :
A) d'un moteur / générateir i-tech léger à technologie brushless haute performance et de couple élevé à vitesse moyenne (1 M/G).

L'énergie initiale de notre système dépend d'un moteur (1 M/G) branché sur l'ensemble batteries (8) embarquées et agissant comme démarreur - ou accélérateur de rotation lorsque le système est déjà en fonctionnement - (1 M/) au début de chaque cycle de production.

Ce même moteur démarreur (1 M/) devient générateur (1 /G) et producteur d'électricité lorsqu'il est activé ensuite par l'énergie cinétique du volant d'inertie (3) qu'il à mis en rotation.

B) de deux unités d'embrayages électromagnétiques à contact rapide et sans frottement lorsque désactivé (2 et 4).

Les deux unités d'embrayages électromagnétiques (2, 4) se distinguent par leur fonction ; la première unité (2) contribue à transférer et à transformer l'énergie électrique du moteur démarreur (1 M/) en énergie cinétique ; et la seconde unité (4), à activer le convertisseur de vitesse (5, 5b) conduisant à l'axe plein (7) relié directement au générateur (1 /G).

C) d'un volant d'inertie de forme cylindrique à couple puissant par son rapport poids et vitesse de rotation et ses paramètres matériau / dimensions - ce composant (3) est immédiatement précédé et suivi d'une unité d'embrayage) (2, 4).

L'énergie cinétique du volant d'inertie (3) est transférée au générateur (1 /G) après avoir atteint (par le moteur démarreur (aussitôt désactivé) une vitesse de rotation max. préprogrammée.

D) d'une unité d'engrenages (5) multiplicateur ou convertisseur, lorsqu'activé, de la vitesse de rotation du volant d'inertie (3).

L'unité d'engrenages (5) d'une part protège le volant (3) en limitant sa vitesse de rotation et d'autre part en multipliant par engrenages interposés (5a, 5b) la vitesse de rotation de la tige pleine (7) solidaire du générateur (1 /G) pour prolonger dans la durée l'xploitation des zones de vitesse productives du générareur.

E) d'un arbre de transmission double tiges (6, 7) fait d'une tige extérieure creuse découpée en quatre sections ou tiges (6a1, 6a2, 6a3, 6a4) et d'une tige intérieure pleine (7), toutes deux tournant dans la même direction;
- la tige creuse (6) portant, en rotation libre ou solidaire, un ou plusieurs des composants susmentionnés (1 à 5); et,
- la tige pleine (7) soutien de l'ensemble des tiges creuses (6a1, 6a2, 6a3, 6a4) et des composants (1, 2, 3, 4, 5) dont elles sont solidaires, reliant le multiplicateur de vitesse (5) directement au moteur lorsque ce dernier a fonction de générateur (1 /G).

Les deux tiges creuses des extrémités (6a1, 6a4) ont la particularité d'être soudées ou rendues solidaires de la tige pleine (7) par une clavette ou une goupille (des rondelles respectant au besoin l'écart entre tiges creuses et tige pleine) alors que les tiges creuses (6a 2, 6a3) peuvent tourner librement sur la tige pleine (7) en s'appuyant sur des roulements à billes (ou autres moyens proposés par l'industrie).

L'arbre de transmission (6, 7) est posé, confortée et stabilisé sur roulement à billes (6b) dans les ancrages des paliers du boîtier de protection (12) sommairement illustré. Des paliers nains (12a) complémentaires à l'armature (12) placées au-dessus et en dessous et dans le tracé des raiinures taillées dans le volant d'inertie (3) neutralisent les écarts possibles de positionnement dûs au secousses et au chocs subis par la carosserie du vénicule.

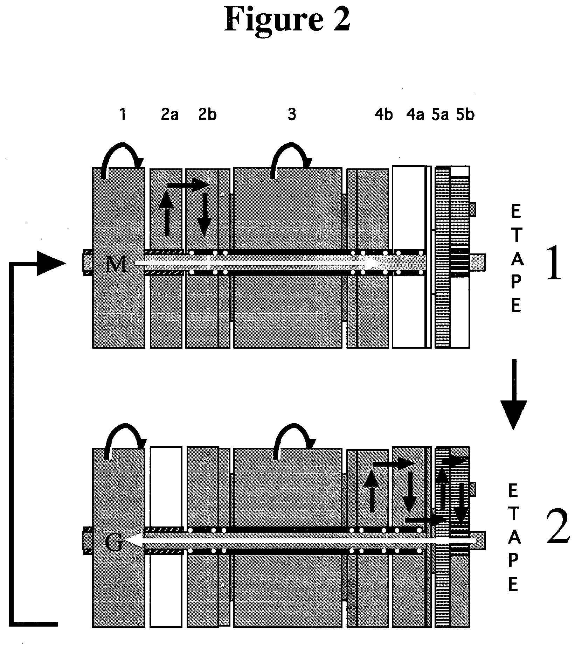

Elément central du système , l'arbre de transmission est un essieu à double tiges (6, 7) :
- la première, la tige (intérieure) pleine (7) est faite d'une seule pièce, prend appui sur les deux paliers principaux de l'armature (12), a pour fonction de soutenir l'ensemble des composants du système (1 à 5) et les tiges porteuses (6a1, 6a2, 6a3, 6a4) et par contact des embrayages I (2) de transformer en énergie cinétique, l'énergie électrique du moteur (1 M/) au volant d'inertie (Fig. 2-E1) et par contact des embrayages II (4) de transmettre l'énergie cinétique du volant d'inertie (3) (Fig. 2-E2) au générateur d'électricité ;
- la seconde partie de cet essieu, la tige (extérieure) creuse (6) présente quatre tiges (6a1, 6a2, 6a3, 6a4) distinctes par la longueur, les diamètres extérieurs et intérieurs étant les mêmes; et alignées selon leur axe de rotation longitudinale (X) en appui sur la tige pleine (7) et tournant toutes dans la même direction que la tige pleine (7).

Les deux tiges de l'arbre (6, 7) étant transmetteurs de couple ont pour fonction, à différentes périodes du processus de recharge (Fig. 2-E1, 2), d'assurer l'entrée en activité d'un ou plus des composants (1 à 5).

La tige pleine (7) porte donc et regroupe tous les éléments du système, (1 à 5) eux-mêmes portés par les tiges creuses (6a1, 6a2, 6a3, 6a4). Ils jouent les uns après ou avec les autres le rôle qui leur est assigné selon un cycle de séquences préprogrammées électroniquement (10, 11) suite aux informations relayées par les capteurs compte-tours (9a). Ces composants posés sur les tiges creuses libres (6a2, 6a3) ou liés (6a1, 6a4) engagent, transfèrent, transmettent, produisent et désengagent.

Le premier plateau (2a) de l'unité d'embrayage électromagnétique I (2) porté par la tige (6al) soutenant aussi le moteur (1M/) devient ainsi solidaire des activités du moteur / générateur (1 M/G) fixé ou soudé solidement à la tige pleine (7). Ce plateau (2a) tourne donc toujours à la vitesse du moteur / générateur (1 M/G), de la tige creuse (6a 1) et de la tige pleine (7).

Le second plateau (2b) de l'ensemble d'embrayage I (2) fixé sur la tige creuse (6a2), selon la séquence du cycle programmée, peut entrer en contact avec le plateau (2a) auquel il est jumelé.

Le plateau d'embrayage (2b) est fixé à la paroi cylindrique gauche du volant d'inertie (3) faisant corps avec la tige creuse (6a2) flottant librement sur la tige pleine (7). Au contact électromagnétique des plateaux (2a et 2b) de l'unité d'embrayage I (2), le volant d'inertie (3) se lie directement au moteur démarreur (1 M/) activé et est mis en rotation.

Ce contact entre moteur (1 M/) et volant d'inertie (3) dure le temps d'atteindre par l'accélération du moteur démarreur (1 M/) le nombre de tours/minute inscrit dans e circuit pré programmé (10, 11) du système et exigés par le générateur (1 /G) - (encore inactif) - pourobtenir un rendement efficace à l'étape de production électrique.

Le volant d'inertie (3) est une masse de forme cylindrique centrée sur son axe longitudinal fait d'acier ou autre matériau performant sélectionné en tenant compte du poids, du rayon du volant et de sa résistance et vitesse maximale avant risque de rupture.

Fixé sur la tige creuse (6a2) et en rotation libre sur la tige pleine (7), le volant d'inertie (3) fait bloc sur sa paroi droite avec un second plateau d'embrayage (4b) appartenant à l'ensemble électromagnétique II (4).

Jumelé au plateau (4b), le plateau (4a) est porté par la tige creuse (6a 3) et fixé solidement à un disque (5a) porté par cette même tige creuse (6a3) tournant à l'extérieur du carter (ou boîtier) de l'unité d'engrenages (5), multiplicateur ou convertisseur de vitesse dont il fait partie intégrante.

Ce disque (5a) tournant librement, monté et fixé sur la tige creuse (6a 3) communique avec les roues et pignons dentés à l'intérieur du multiplicateur (5).

Au contact des deux plateaux (4b) et (4a) de l'unité d'embrayage électromagnétique II (4), l'engagement du disque (5a) et de la roue dentée (5b) du multiplicateur (5) établit le contact direct entre le volant d'inertie (3) en rotation et la tige pleine (7) et, par la même, avec le moteur démarreur devenu, le temps de la mise en contact électromagnétique, générateur électrique (1 /G).

Le partage de l'énergie cinétique du volant d'inertie (3) en rotation libre avec la tige creuse (6a2) et la tige creuse (6a3) se fait par contact des plateaux (4b,4a) de l'unité d'embrayage II (4) mais après le désengagement préalable des plateaux (2a, 2b) de l'unité d'embrayage I (2).

Sur activation de l'unité d'embrayage II (4), le multiplicateur (5) par le biais d'une large roue dentée à l'intérieur du carter, prolongeant et ournant à la même vitesse que le disque (5a) et une série d'engrenages intermédiaires, accroît la vitesse de rotation de la tige pleine (7) dont extrémité opposée au générateur (1 /G) est engagée dans la roue dentée 'motrice' (5b) du convertisseur (5) pour atteindre la vitesse de rendement exigée par le générateur (1 /G), sans modifier la vitesse du volant d'inertie (3).

La tige pleine (7) traverse le disque extérieur (5a) porté par la tige creuse (6a3) et la large roue dentée intérieure, appuyée sur le prolongement central du disque (5a) et par roulement à billes, sur la paroi verticale de la première ouverture du carter, la tige pleine (7) étant elle-même appuyée à son extrémité par roulement à billes sur l'ouverture de sortie de la paroi verticale du carter regroupant les unités d'engrenages (5).

Sur commande automatique du système de contrôle électronique (9-10) pour le transfert de l'énergie, le contact de l'unité d'embrayage II (4) associant (6a2) à (6a3) s'effectue aussitôt vers la tige creuse (6a4) solidaire de la roue dentée (5b) et de la tige pleine (7) directement liée au générateur activé (1 /G).

L'énergie électrique générée (Fig. 2-E2), résultat de ces opérations successives est transférée vers et stockée dans l'ensemble batteries (8) pour remplacer l'énergie consommée par le propulseur électrique du véhicule.

La période production électrique (Fig. 2 E2) se prolonge jusqu'à la reprise du processus (Fig. 2-E1) de notre système, la vitesse de rotation apportée au générateur ayant alors atteint un seuil de productivité énergétique inférieur aux paramètres tours/sec. exigés par le générateur (1 /G) pour réalimenter les batteries (8).

### Les figures annexées qui illustrent l'invention :

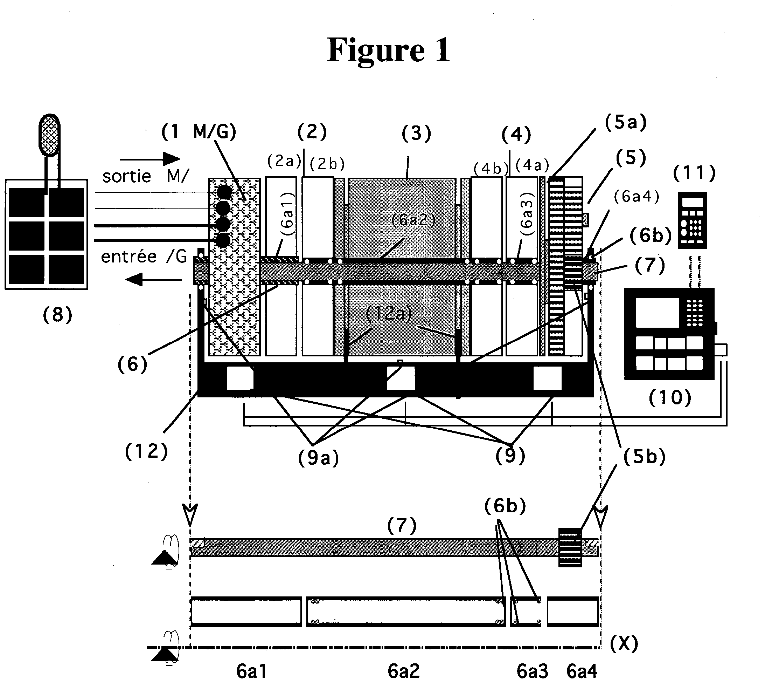

**Figure 1**: Descriptif des composants du système embarqué pour la recharge des batteries embarquées d'un véhicule à propulsion ou à traction électrique.
**Figure 2****:** Etapes de fonctionnement du système embarqué pour la recharge des batteries d'un véhicule électrique en mouvement ou à l'arrêt.

### Comment selon l'invention le système fonctionne :

Après sélection des paramètres de production disponibles à l'écran de la télécommande (11) accrochée an tableau de bord, sélection établie en fonction de la vitesse de rotation donnée au volant d'inertie (3), le conducteur appuie sur le bouton (ON) de mise en marche du système.

A l'abri du conducteur, ur le boîtier ou armature (12) du système, des affichages (9, 10) informant sur la vitesse de rotation les différents composants (relevées par les compte-tours - 9a) et sur la production d'énergie en Watts permettent l'entretien, le contrôle de l'ensemble et, s'il y a lieu, d'apporter des modifivations à la programmation.

La commande ON (11) actionne le moteur démarreur (1 M/) et lance le programme (10) du système de recharge des batteries (8).

Le conducteur n'a plus ensuite qu'à démarrer le moteur électrique, propulseur du véhicule et de prendre la route vers sa destination.

La première étape du système de recharge (Fig. 2-E1), met donc en marche le moteur démarreur (1 M/) et presqu'en simultané connecte les plateaux (2a) et (2b) de l'embrayage électromagnétique I (2).

La tige creuse (6a 1) solidaire de l'arbre de transmission (7) soutient à la fois le moteur (1 M/) et le premier plateau (2a) de l'embrayage I (2). Au contact électromagnétique avec le second plateau (2b) de l'embrayage I (2), le volant d'inertie (3) porté librement par la tige creuse (6a2) avec le second plateau (2b) fixé à sa paroi gauche sont entraînés pendant quelques dizaines de secondes par le moteur démarreur (1 M/) - (Fig. 2-E1), le temps d'atteindre la vitesse de rotation exigée pour assuré une productivité efficace du générateur (1 /G), qui doit bientôt entrer en action (la vitesse tours/min atteinte correspondant à celle préprogrammée électroniquement).

La fin de la première étape (Fig. 2-E1) du processus déconnecte d'abord les deux plateaux (2a-2b) du premier ensemble d'embrayage I (2) laissant le volant (3) fixé à la tige creuse (6a2) tourner librement à pleine vitesse sur la tige pleine (7).

Pendant cet instant, le moteur tournant à vide (1 M/G) se met en mode 'transfert' et passe de la fonction moteur (1 M/) à celle de générateur (1 /G) et (Fig. 2-E2).

La deuxième et dernière étape du cycle s'entame alors que les plateaux (4b, 4a) du second ensemble d'embrayage électromagnétique II (4) entrent en contact programmé et ne font plus qu'un (4) - (Fig. 2-E2) établissant à partir du disque extérieur (5a) soudé à l'unité d'engrenages (5), la jonction entre le volant d'inertie (3) et l'unité d'engrenages, convertisseur de vitesse (5) dont la roue dentée 'motrice' (5b) est solidaire de la tige creuse (6a4) elle-même solidaire de la tige pleine (7) liée à l'extrémité opposée au moteur devenu générateur (1 /G).

La roue motrice du multiplicateur (5b) augmente alors la vitesse de rotation de la tige pleine (7) sans modifier la vitesse du volant d'inertie (3) porté par la tige (6a2). La masse en mouvement demeure ainsi dans des limites de rotation sûre et acceptable. Quant à la vitesse multipliée transmise à la tige pleine (7) par l'unité d'engrenages (5) et transférée directement au générateur (1 /G), elle prolonge dans la durée l'exploitation du champ productif du générateur d'électricité.

En somme dès l'instant où le moteur (1 M/) change de fonctionnalité et devient générateur (1 /G), c'est le volant d'inertie (3) entraîné à vitesse prescrite augmentée par conversion, qui devient l'élément moteur et l'unité de production électrique du système.

Entraîné par le volant (3), le générateur (1 /G) produit de l'énergie électrique qui est ensuite dirigée vers et stockée dans l'ensemble batteries (8).

Cette nouvelle énergie remplace ainsi en partie l'énergie consommée par le moteur électrique, propulseur du véhicule.

Le volant (3) entraînera le générateur (1 /G) jusqu'à ce qu'il sorte de la zone productive du générateur (ex. 5000 > 2500 rpm).

La limite inférieure étant connue et programmée, une fois atteinte, met fin au contact électromagnétique du second ensemble d'embrayage II (4) - (Fig. 2-E2) et pendant que le volant (3) continue à tourner librement sur la tige pleine (7), l'unité moteur / générateur (1 M/G) reprend automatiquement sa fonction de moteur démarreur (1 M/) - (Fig. 2-E1).

Dès que le moteur ayant repris cette fonction (1 M/) atteint la vitesse à laquelle tourne encore le volant d'inertie (3), la première étape du processus de production (Fig. 2-E1) rapproche automatiquement et connecte à nouveau les plateaux
(2a, 2b) du premier ensemble d'embrayage éléctromagnétique I (2) et recommence les séquences d'activation des composants (1, 2, 3, 4, 5) du système et l'opération de recharge des piles (Fig. 2- E1 et 2), finalité de ce système qu'est notre invention.

Comme ce système de recharge se dissocie du type de conduite, de la forme de contrôle, de la maîtrise et des caractéristiques conceptuelles du moyen de transport électrique concerné, (ex. puissance de la masse cinétique du véhicule, des freins, de la motorisation, etc.) celui-ci peut être activé même lorsque le véhicule est totalement immobilisé (ex. pause conducteur, sortie cinéma, bornes toutes occupées, zone isolées, etc.).

Lorsque le véhicule est en mouvement, en route vers sa destination, un signal d'alerte avertit les occupants qu'un minimum d'énergie reste entreposé. En effectuant une imprévue, une recharge peut être alors réaliséepour réalimenter suffisamment les batteries et reprendre la route vers la borne la plus proche. Ce système permet ainsi un dépannage secours loin de tous services.

Dépendant enfin de l'empressement du conducteur, du type de parcours emprunté et des passagers et marchandique le véhicule transporte, ce système est une solution pour distancer confortablement et réduire le nombre d'arrêts recharge batteries d'un point A à un point B.

### Indications susceptibles d'applications industrielles

Une adaptation de ce système peut être envisagée pour les différents moyens de transport 100% électriques et hybrides mais également pour les fourgonnettes et poids lourds, les bateaux de plaisance.

Les réseaux ferroviaires secondaires pourraient exploiter ce système pour les petits circuits et ainsi donner aux localités isolées ou mal desservies accès aux réseaux principaux en mettant en place des tracés de rails sommaires pour wagonmotrices innovantes.

Ce système pourrait équiper les avions à propulsion électrique (déjà d'actualité) de petite ou moyenne taille et fonctionner en combinaison ou sans modules solaire afin de prolonger leur durée de vol.

Notre invention pourrait aussi remplacer les groupes électrogènes conventionnels pour combler les périodes creuses ou servir de complément aux aménagements confort des habitats modernes à énergie éolienne et panneaux solaires.

## Revendications

1. Un système pour la recharge de batteries (8) embarquées dans un véhicule électrique **caractérisé en ce qu'**il comprend :
- un moteur/générateur (1 M/G), configuré pour fonctionner selon une fonction démarreur (1 M/) et une fonction générateur (1 /G), ledit moteur/générateur (1 M/G) étant branché sur les batteries (8),
- un volant d'inertie (3),
- un ensemble d'engrenages (5) et une roue dentée (5b) à la sortie de l'ensemble d'engrenages (5), ledit ensemble d'engrenages (5) comprenant une unité d'engrenages (5a) servant à contenir la vitesse de rotation du volant d'inertie (3) et à multiplier la vitesse de rotation à la sortie de ladite roue dentée (5b) pour prolonger dans la durée l'exploitation des zones de vitesse productives du générateur (1 /G),
- deux embrayages électromagnétiques (2, 4), chacun desdits embrayages électromagnétiques étant fixé à chacune des extrémités dudit volant d'inertie (3), et formés chacun de deux plateaux (2a, 2b ; 4a, 4b),
o le premier embrayage permettant au moteur/générateur (1 M/G) de mettre en rotation le volant d'inertie (3), et
o le second embrayage (4) liant le volant d'inertie (3) à l'ensemble d'engrenages (5) convertisseur de vitesse,
- deux arbres de transmission (6, 7),
o un premier arbre de transmission (6) étant composé d'une tige extérieure creuse et
o un deuxième arbre de transmission étant composé d'une tige intérieure pleine (7) reliée à la roue dentée (5b) pour récupérer la vitesse de rotation augmentée par l'ensemble d'engrenages (5) et rediriger l'énergie cinétique correspondante vers le générateur (1 /G) d'électricité dont elle est solidaire, la tige extérieure creuse du premier arbre de transmission (6) et la tige intérieure pleine (7) du deuxième arbre tournant dans la même direction, la tige extérieure creuse présentant quatre tiges creuses (6a1, 6a2, 6a3, 6a4) ayant toutes les mêmes diamètres extérieurs et intérieurs, comprenant :
▪ une première tige creuse (6a1) solidaire de la tige pleine (7) et solidaire du moteur/générateur (1 M/G) et du premier plateau (2a) du premier embrayage (2),
▪ une deuxième tige creuse (6a2), libre en rotation autour de la tige pleine (7) et solidaire du deuxième plateau (2b) du premier embrayage (2), du volant d'inertie (3) et du premier plateau (4b) du deuxième embrayage (4),
▪ une troisième tige creuse (6a3) libre en rotation autour de la tige pleine (7) et solidaire du deuxième plateau (4a) du deuxième embrayage (4) et d'un disque extérieur (5a) de l'ensemble d'engrenages (5),
▪ une quatrième tige creuse (6a4) solidaire de la tige pleine (7) et solidaire de la roue dentée (5b) de l'ensemble d'engrenages (5),
- une unité de programmation électronique (10) et une unité de contrôle automatique (11) recevant des vitesses de rotation des tiges creuses (6a1, 6a2, 6a3, 6a4), enregistrées par des capteurs compte-tours (9a) et des vitesses de rotation, calculées ou mesurées par des capteurs, de l'unité moteur/générateur (1 M/G), du volant d'inertie (3) et de la roue dentée (5b), pour commander l'arrêt et la mise en marche du système de recharge de batteries embarquées,
le système étant configuré pour que la recharge des batteries soit effectuée que le véhicule électrique soit en marche, c'est-à-dire en mouvement, ou à l'arrêt, c'est-à-dire immobilisé.

2. Système selon la revendication 1, **caractérisé en ce que** :
- dans ladite fonction démarreur (1 M/), le moteur/générateur (1 M/G) est configuré, pendant une première étape, pour lancer et entraîner en rotation le volant d'inertie (3) jusqu'à ce que ledit volant d'inertie (3) atteigne une vitesse de rotation prédéterminée,
- dans ladite fonction de générateur (1 /G), le moteur/générateur (1 M/G) est configuré, pendant une deuxième étape, pour produire une énergie électrique et recharger les batteries (8) embarquées à partir d'une énergie cinétique emmagasinée par le volant d'inertie (3) pendant la première étape.

3. Système selon la revendication 2, **caractérisé en ce que** ladite fonction de générateur (1/G) est active le temps que ledit volant d'inertie (3) perde suffisamment de vitesse pour atteindre une vitesse de rotation prédéterminée basse calculée également par l'unité de contrôle automatique (11).

4. Système selon la revendication 1, **caractérisé en ce que** le premier plateau (2a) du premier embrayage électromagnétique (2) est solidaire du moteur/générateur (1 M/G) et le deuxième plateau (2b) du premier embrayage électromagnétique (2) est solidaire d'une extrémité du volant d'inertie (3).

5. Système selon la revendication 1, **caractérisé en ce que** le premier plateau (4b) du deuxième embrayage électromagnétique (4) est solidaire d'une extrémité du volant d'inertie (3) et le deuxième plateau (4a) du deuxième embrayage électromagnétique (4) est solidaire d'un disque extérieur (5a) de l'ensemble d'engrenages (5).

6. Système selon la revendication 1, **caractérisé en ce que** les tiges creuses (6a2, 6a3) tournent librement autour de la tige pleine (7) grâce à des roulements à billes (6b).

7. Système selon la revendication 1, **caractérisé en ce que** la tige pleine (7) est d'une seule pièce et d'une longueur égale aux quatre tiges creuses (6a1, 6a2, 6a3, 6a4) alignées selon leur axe de rotation longitudinale (X).

8. Système selon la revendication 1, **caractérisé en ce que** les tiges creuses 6a1, 6a4) sont soudées ou solidaires de ladite tige pleine (7) par une clavette, et présentent des rondelles pour respecter au besoin un écart entre tiges creuses (6a1, 6a2, 6a3, 6a4) et tige pleine (7).

9. Système selon la revendication 1 **caractérisé en ce que** l'ensemble d'engrenages (5) comprend un disque extérieur (5a) incorporé à une large roue dentée.

## Patentansprüche

1. System zum Aufladen von Batterien (8), die in einem Elektrofahrzeug mitgeführt werden, **dadurch gekennzeichnet, dass** es umfasst:
- einen Motor/Generator (1 M/G), der dazu konfiguriert ist, gemäß einer Anlasserfunktion (1 M/) und einer Generatorfunktion (1 /G) zu funktionieren, wobei der Motor/Generator (1 M/G) an die Batterien (8) angeschlossen ist,
- ein Schwungrad (3),
- eine Anordnung von Rädern (5) und ein Zahnrad (5b) an dem Ausgang der Einheit von Rädern (5), wobei die Einheit von Rädern (5) eine Einheit von Rädern (5a) umfasst, die dazu dient, die Drehzahl des Schwungrads (3) zu verringern und die Drehzahl an dem Ausgang des Zahnrads (5b) zu vervielfachen, um die Nutzung der produktiven Drehzahlzonen des Generators (1 /G) in der Dauer zu verlängern,
- zwei elektromagnetische Kupplungen (2, 4), wobei jede der elektromagnetischen Kupplungen an jedem der Enden des Schwungrads (3) befestigt ist und jeweils aus zwei Platten (2a, 2b; 4a, 4b) gebildet ist,
∘ wobei die erste Kupplung es dem Motor/Generator (1 M/G) erlaubt, das Schwungrad (3) in Drehung zu versetzen, und
∘ die zweite Kupplung (4) das Schwungrad (3) mit der Anordnung von Geschwindigkeitswandlerrädern (5) zu verbinden,
- zwei Übertragungswellen (6, 7),
∘ wobei eine erste Übertragungswelle (6) aus einem hohlen Außenschaft besteht, und
∘ eine zweite Übertragungswelle aus einem massiven Innenschaft (7) besteht, der mit dem Zahnrad (5b) verbunden ist, um die Drehzahl, die von der Einheit von Rädern (5) erhöht wird, zu übernehmen und die entsprechende kinetische Energie zu dem Stromgenerator (1 /G), mit dem sie fest verbunden ist, umzulenken,
wobei der hohle Außenschaft der ersten Übertragungswelle (6) und der massive Innenschaft (7) der zweiten Welle in dieselbe Richtung drehen,
der hohle Außenschaft vier hohle Schäfte (6a1, 6a2, 6a3, 6a4) aufweist, die alle denselben Außen- und Innendurchmesser aufweisen, umfassend:
▪ einen ersten hohlen Schaft (6a1), der mit dem massiven Schaft (7) fest verbunden ist und mit dem Motor/Generator (1 M/G) und der ersten Platte (2a) der ersten Kupplung (2) fest verbunden ist,
▪ einen zweiten hohlen Schaft (6a2), der um den massiven Schaft (7) in Drehung frei und mit der zweiten Platte (2b) der ersten Kupplung (2), dem Schwungrad (3) und der ersten Platte (4b) der zweiten Kupplung (4) fest verbunden ist,
▪ einen dritten hohlen Schaft (6a3), der um den massiven Schaft (7) in Drehung frei und mit der zweiten Platte (4a) der zweiten Kupplung (4) und einer Außenscheibe (5a) der Einheit von Rädern (5) fest verbunden ist,
▪ einen vierten hohlen Schaft (6a4), der mit dem massiven Schaft (7) fest verbunden und mit dem Zahnrad (5b) der Einheit von Rädern (5) fest verbunden ist,
- eine elektronische Programmiereinheit (10) und eine automatische Steuereinheit (11), die Drehzahlen der hohlen Schäfte (6a1, 6a2, 6a3, 6a4) empfangen, die von Drehzahlzählersensoren (9a) aufgezeichnet werden, und Drehzahlen, die von Sensoren, der Motor/Generator-Einheit (1 M/G), der Schwungscheibe (3) und dem Zahnrad (5b) berechnet oder gemessen werden, um das Stoppen und das Ingangsetzen des mitgeführten Batterieaufladesystems zu steuern,
wobei das System dazu konfiguriert ist, dass die Aufladung der Batterien ausgeführt wird, ob das Elektrofahrzeug in Gang ist, das heißt in Bewegung, oder beim Stoppen, das heißt stillsteht.

2. System nach Anspruch 1, **dadurch gekennzeichnet, dass**:
- in der Anlasserfunktion (1 M/) der Motor/Generator (1 M/G) dazu konfiguriert ist, während eines ersten Schritts das Schwungrad (3) zu starten und in Drehung anzutreiben, bis das Schwungrad (3) eine vorbestimmte Drehzahl erreicht,
- in der Generatorfunktion (1 /G) der Motor/Generator (1 M/G) dazu konfiguriert ist, während eines zweiten Schritts eine elektrische Energie zu erzeugen und die mitgeführten Batterien (8) ausgehend von einer kinetischen Energie, die von dem Schwungrad (3) während des ersten Schritts gespeichert wird, aufzuladen.

3. System nach Anspruch 2, **dadurch gekennzeichnet, dass** die Generatorfunktion (1 /G) in der Zeit aktiv ist, in der das Schwungrad (3) ausreichend an Drehzahl verliert, um eine vorbestimmte niedrige Drehzahl zu erreichen, die ebenfalls von der automatischen Steuereinheit (11) berechnet wird.

4. System nach Anspruch 1, **dadurch gekennzeichnet, dass** die erste Platte (2a) der ersten elektromagnetischen Kupplung (2) fest mit dem Motor/Generator (1 M/G) verbunden ist, und die zweite Platte (2b) der ersten elektromagnetischen Kupplung (2) fest mit einem Ende des Schwungrads (3) verbunden ist.

5. System nach Anspruch 1, **dadurch gekennzeichnet, dass** die erste Platte (4b) der zweiten elektromagnetischen Kupplung (4) fest mit einem Ende des Schwungrads (3) verbunden ist, und die zweite Platte (4a) der zweiten elektromagnetischen Kupplung (4) fest mit einer Außenscheibe (5a) der Einheit von Rädern (5) verbunden ist.

6. System nach Anspruch 1, **dadurch gekennzeichnet, dass** die hohlen Schäfte (6a2, 6a3) dank Kugellagern (6b) frei um den massiven Schaft (7) drehen.

7. System nach Anspruch 1, **dadurch gekennzeichnet, dass** der massive Schaft (7) aus einem einzigen Stück und aus einer Länge gleich den vier hohlen Schäften (6a1, 6a2, 6a3, 6a4), die gemäß ihrer Längsrotationsachse (X) ausgerichtet sind, besteht.

8. System nach Anspruch 1, **dadurch gekennzeichnet, dass** die hohlen Schäfte (6a1, 6a4) mit dem massiven Schaft (7) geschweißt oder damit fest durch einen Keil verbunden sind, und Unterlegscheiben aufweisen, um bei Bedarf einen Abstand zwischen hohlen Schäften (6a1, 6a2, 6a3, 6a4) und dem massiven Schaft (7) einzuhalten.

9. System nach Anspruch 1, **dadurch gekennzeichnet, dass** die Einheit von Rädern (5) eine Außenscheibe (5a), die in ein großes Zahnrad eingebaut ist, umfasst.

## Claims

1. A system for recharging batteries (8) on-board an electric vehicle **characterised in that** it comprises:
- a motor/generator (1 M/G), configured to operate according to a starter function (1 M/) and a generator function (1 /G), said motor/generator (1 M/G) being plugged on the batteries (8),
- a flywheel (3),
- a gear set (5) and a toothed wheel (5b) at the output of the gear set (5), said gear set (5) comprising a gear unit (5a) intended to contain the rotational speed of the flywheel (3) and to multiply the rotational speed at the output of said toothed wheel (5b) to prolong the exploitation over time of the productive speed zones of the generator (1 /G),
- two electromagnetic clutches (2, 4), each of said electromagnetic clutches being fastened to each of the ends of said flywheel (3), and each formed by two plates (2a, 2b; 4a, 4b),
o the first clutch enabling the motor/generator (1 M/G) to set the flywheel (3) into rotation, and
o the second clutch (4) linking the flywheel (3) to the speed converter gear set (5),
- two transmission shafts (6, 7),
o a first transmission shaft (6) being composed by a hollow external rod, and
o a second transmission shaft being composed by a solid internal rod (7) linked to the toothed wheel (5b) to recover the rotational speed increased by the gear set (5) and redirect the corresponding kinetic energy to the electric generator (1 /G) to which it is secured,
the hollow external rod of the first transmission shaft (6) and the solid internal rod (7) of the second shaft rotating in the same direction,
the hollow external rod having four hollow rods (6a1, 6a2, 6a3, 6a4) all having the same external and internal diameters, comprising:
▪ a first hollow rod (6a1) secured to the solid rod (7) and secured to the motor/generator (1 M/G) and to the first plate (2a) of the first clutch (2),
▪ a second hollow rod (6a2), free in rotation about the solid rod (7) and secured to the second plate (2b) of the first clutch (2), the flywheel (3) and the first plate (4b) of the second clutch (4),
▪ a third hollow rod (6a3) free in rotation about the solid rod (7) and secured to the second plate (4a) of the second clutch (4) and an external disk (5a) of the gear set (5),
▪ a fourth hollow rod (6a4) secured to the solid rod (7) and secured to the toothed wheel (5b) of the gear set (5),
- an electronic programming unit (10) and an automatic control unit (11) receiving rotational speeds of the hollow rods (6a1, 6a2, 6a3, 6a4), recorded by rotation-counter sensors (9a) and rotational speeds, computed or measured by sensors, of the motor/generator unit (1 M/G), the flywheel (3) and the toothed wheel (5b), to command the stoppage and start-up of the system for recharging on-board batteries,
the system being configured so that recharging of the batteries is performed whether the electric vehicle is on, that is to say moving, or off, that is to say immobilised.

2. The system according to claim 1, **characterised in that**:
- in said starter function (1 M/), the motor/generator (1 M/G) is configured, during a first step, to launch and drive the flywheel (3) in rotation until said flywheel (3) reaches a predetermined rotational speed,
- in said generator function (1 /G), the motor/generator (1 M/G) is configured, during a second step, to produce an electrical energy and recharge the on-board batteries (8) from a kinetic energy stored by the flywheel (3) during the first step.

3. The system according to claim 2, **characterised in that** said generator function (1 /G) is active for the time while the flywheel (3) loses enough speed to reach a predetermined low rotational speed also computed by the automatic control unit (11).

4. The system according to claim 1, **characterised in that** the first plate (2a) of the first electromagnetic clutch (2) is secured to the motor/generator (1 M/G) and the second plate (2b) of the first electromagnetic clutch (2) is secured to one end of the flywheel (3).

5. The system according to claim 1, **characterised in that** the first plate (4b) of the second electromagnetic clutch (4) is secured to one end of the flywheel (3) and the second plate (4a) of the second electromagnetic clutch (4) is secured to an external disk (5a) of the gear set (5).

6. The system according to claim 1, **characterised in that** the hollow rods (6a2, 6a3) rotate freely about the solid rod (7) by means of ball bearings (6b).

7. The system according to claim 1, **characterised in that** the solid rod (7) is formed in one-piece and has a length equal to the four hollow rods (6a1, 6a2, 6a3, 6a4) aligned according to their longitudinal axis of rotation (X).

8. The system according to claim 1, **characterised in that** the solid rods (6a1, 6a4) are welded or secured to said solid rod (7) by a key, and have washers to maintain, where needed, a spacing between the hollow rods (6a1, 6a2, 6a3, 6a4) and the solid rod (7).

9. The system according to claim 1, **characterised in that** the gear set (5) comprises an external disk (5a) incorporated into a large toothed wheel.
